# EUROPÄISCHE PATENTSCHRIFT

(11) **EP 2 463 060 B1**
(45) Veröffentlichungstag und Bekanntmachung des Hinweises auf die Patenterteilung: **14.05.2014**
(21) Anmeldenummer: 10194325.6
(22) Anmeldetag: 09.12.2010
(51) Int. Cl.: B25B 27/00

(54) **Werkzeug und Verfahren zum Einführen einer Trägerschicht eines Dichtbandes in Nuten eines Profilrahmens**
Tool and method for inserting a carrier layer of a sealing strip in the grooves of a profile frame
Outil et procédé d'introduction d'une couche de support d'une bande d'étanchéité dans des rainures d'un cadre de profilé

(43) Veröffentlichungstag der Anmeldung: 13.06.2012
(73) Patentinhaber: ISO-Chemie GmbH, 73431 Aalen (DE)
(72) Erfinder:
(74) Vertreter: Wächter, Jochen

(56) Entgegenhaltungen:
- EP-A2- 0 163 448
- WO-A1-00/72418
- DE-C1- 19 502 511
- DE-U1- 29 606 672
- GB-A- 2 376 710

## Beschreibung

Die Erfindung bezieht sich auf ein Werkzeug und ein Verfahren zum Einführen einer Trägerschicht eines Dichtbands in Nuten eines Profilrahmens.

Dichtbänder aus weichem Schaumstoff werden seit langem für das Abdichten von Fugen, beispielsweise zwischen einem Rahmenprofil eines Fensters oder einer Tür und einer Gebäudewand, verwendet.

Aus EP 1 131 525 B1 ist ein vorkomprimiertes Dichtband bekannt, das aus einem elastisch rückstellfähigen Schaumstoffstreifen rechteckigen Querschnitts besteht, der in komprimiertem Zustand vollständig von einer Umhüllung umschlossen ist, die von einer Kunststofffolie gebildet ist. Zur Festlegung des Schaumstoffstreifens innerhalb der Umhüllung ist er an seiner Unterseite mit der Umhüllung verklebt, und die Umhüllung ist ihrerseits an ihrer Unterseite mit gesonderten Klebemitteln, beispielsweise einem doppelseitig klebenden Band, an einem Rahmenprofil anheftbar.

Dichtbänder dieser Art werden an dem abzudichtenden Rahmenprofil angeklebt, und nach Montage des Rahmenprofils in einer Gebäudewandöffnung wird die Umhüllung aufgerissen, um es dem Schaumstoffstreifen zu ermöglichen, sich elastisch rückzustellen und damit das Rahmenprofil an der Gebäudewand abzudichten.

In US 4 204 373 ist ein Dichtband beschrieben, das aus einer flachen Leiste zum Ankleben an ein Rahmenprofil und einem darauf angeordneten Schaumstoffstreifen besteht. Der Schaumstoffstreifen ist von einer Folie aus Papier oder Kunststoff abgedeckt, die an der flachen Leiste angeklebt ist und den Schaumstoffstreifen im komprimierten Zustand hält. Im Randstreifen der Abdeckfolie verlaufen Aufreißfäden, mit deren Hilfe die Folie nach Installation des mit dem Dichtband versehenen Rahmenprofils im Bauwerk aufgerissen werden kann.

Bei diesen bekannten Dichtbändern ist jedoch nachteilig, dass sie nur auf ebene Rahmen aufgeklebt werden können. Oftmals ist es aber auch wünschenswert, Dichtbänder unmittelbar an Fensterrahmenprofilen anzubringen, welche nach außen abragende, längslaufende Profilleisten aufweisen.

Für einen solchen Einsatz wurde in DE 10 2008 025 019 A1 ein Dichtband offenbart, welches sich zwischen winkelförmigen Enden zweier Randprofilleisten eines Fensterrahmens fixieren lässt, indem eine biegesteife Schicht, auf der der Weichschaumstoff angeordnet ist, in den Zwischenraum zwischen den Profilleisten eingebracht wird und durch die winkelförmigen Enden gegen ein Herausrutschen gesichert wird.

Diese Ausführungsform besitzt den Nachteil, dass der Schaumstoff von der biegesteifen Schicht aus nach innen in Richtung des Rahmens abragt. Für die gewünschte Abdichtung des Zwischenraums zwischen Rahmenprofil und Mauerwerk muss die biegesteife Schicht also zerstört werden, damit sich der Schaumstoff in diese Richtung ausdehnen kann. Auch die Einbringung des Dichtbands in den Profilkanal geschieht ausschließlich durch Handarbeit und dauert damit sehr lange.

Der Erfindung liegt die Aufgabe zugrunde, ein Werkzeug zu schaffen, mit der ein spezielles Dichtband mit einer Trägerschicht besonders leicht und schnell mit einer Vielzahl unterschiedlicher Profilrahmen verbunden werden kann, sowie ein Verfahren zum Anbringen eines solchen Dichtbands am Profilrahmen anzugeben.

Diese Aufgabe wird durch die Merkmale des Anspruchs 1 bzw. des Anspruchs 9 gelöst.

Erfindungsgemäß weist das Werkzeug zum Einführen einer Trägerschicht eines Dichtbandes in Nuten eines Profilrahmens zwei seitliche Führungselemente auf, die miteinander verbunden sind, wobei sich die Führungselemente gegenüber liegen und zwischen sich einen Führungskanal für die Trägerschicht des Dichtbands definieren, der von einem höher gelegenen Eintrittspunkt zu einem tiefer gelegenen Austrittspunkt in einer Führungsrichtung des Werkzeugs verläuft. Dabei verjüngt sich der Führungskanal in Führungsrichtung.

Mit dieser Ausgestaltung ist es möglich, ein Dichtband mit seiner Trägerschicht auf besonders einfache Weise in Nuten eines Profilrahmens einzufügen und damit die Zeitdauer zum Ausrüsten des Profilrahmens mit dem Dichtband deutlich zu verringern.

Vorzugsweise weist jedes Führungselement einen gegenüber der Führungsrichtung schräg geneigten Wandabschnitt auf, der derart ausgebildet ist, dass er in Richtung des Austrittpunktes eine Kraftkomponente auf einen durch ihn geführten Randabschnitt der Trägerschicht nach unten ausübt. Auf diese Weise werden Randabschnitte der Trägerschicht des Dichtbands beim Durchlaufen des Führungskanals automatisch nach unten gebogen und somit in die Nuten des Profilrahmens eingefügt.

Vorzugsweise bildet der schräg geneigte Wandabschnitt gleichzeitig die seitliche Begrenzung des Führungskanals. Mit dieser Ausgestaltung wird der Herstellungsaufwand für das Werkzeug minimiert.

Zum gleichzeitigen Einführen von zwei gegenüberliegenden Randabschnitten der Trägerschicht des Dichtbands in entsprechende Nuten des Profilrahmens ist es vorteilhaft, wenn die schräg geneigten Wandabschnitte der beiden Führungselemente spiegelsymmetrisch bezüglich einer Mittelebene des Führungskanals ausgebildet sind.

Zur Reduzierung des manuellen Arbeitsaufwands weist das Werkzeug außerdem vorzugsweise in seinem unteren Endbereich zwei Halterungsmittel auf, die zur Halterung des Werkzeugs in den Nuten des Profilrahmens dienen.

Das Einführen der Randabschnitte der Trägerschicht des Dichtbands in die Nuten des Profilrahmens wird dadurch noch weiter vereinfacht, dass die Halterungsmittel entlang den Nuten des Profilrahmens verschiebbar sind. Auf diese Weise kann die Bestückung des Profilrahmens mit dem Dichtband entlang eines Holms des Profilrahmens lediglich durch Verschiebung des Werkzeugs in den Nuten des Profilrahmens erfolgen.

In einer bevorzugten Ausführungsform liegen sich die beiden Halterungsmittel gegenüber und sind gegen eine Federkraft zueinander bewegbar, entweder aufeinander zu oder voneinander weg. Auf diese Weise wird ein einfaches Einsetzen und Einrasten der Halterungsmittel in den Nuten des Profilrahmens und möglichst auch ein entsprechendes Entfernen der Halterungsmittel aus den Nuten des Profilrahmens erleichtert.

Zur Einstellung auf verschiedene Dimensionen des zu bestückenden Profilrahmens können die beiden Führungselemente über ein längenverstellbares Verbindungsmittel miteinander verbunden sein.

Das erfindungsgemäße Verfahren zum Einführen einer Trägerschicht eines Dichtbandes in Nuten eines Profilrahmens weist folgende Schritte auf: Bereitstellen des Dichtbands aus weichem Schaumstoff mit einer Trägerschicht; Einführen eines Werkzeugs in Nuten des Profilrahmens; Einführen des Dichtbands in einen Führungskanal des Werkzeugs; und Verschieben des Werkzeugs in den Nuten des Profilrahmens, dabei durch das Verschieben induziertes automatisches Verbiegen von Randabschnitten der Trägerschicht im Führungskanal und zwangsgeführtes Einführen der abgebogenen Randabschnitte der Trägerschicht in die Nuten des Profilrahmens zur großflächigen Aufnahme der Trägerschicht in den Nuten des Profilrahmens.

Mit diesem Verfahren wird eine Möglichkeit bereitgestellt, die manuelle Ausrüstung eines Profilrahmens mit einem Dichtband besonders schnell und mit wenigen Handgriffen durchzuführen und gleichzeitig eine dauerhafte Verbindung zwischen dem Dichtband und dem Profilrahmen herzustellen.

Weitere Merkmale und Vorteile der vorliegenden Erfindung ergeben sich aus der nachfolgenden Beschreibung unter Bezugnahme auf die Zeichnungen.
- Fig. 1: ist eine Querschnittsansicht eines Profilrahmens, der als Ergebnis der Anwendung des erfindungsgemäßen Werkzeugs bzw. des erfindungsgemäßen Verfahrens mit einem Dichtband ausgestattet ist;
- Fig. 2a: ist eine Perspektivansicht einer Ausführungsform des erfindungsgemäßen Werkzeugs von schräg unten;
- Fig. 2b: ist eine Perspektivansicht des Werkzeugs aus Fig. 2a von schräg hinten;
- Fig. 2c: ist eine rückwärtige Ansicht des Werkzeugs aus Fig. 2a;
- Fig. 3a: ist eine Seitenansicht einer anderen Ausführungsform des erfindungsgemäßen Werkzeugs;
- Fig. 3b: ist eine Rückansicht des Werkzeugs aus Fig. 3a; und
- Fig. 4: ist eine Perspektivansicht einer Ausführungsform eines erfindungsgemäßen Werkzeugs, das in Nuten eines Profilrahmens eingesetzt ist und in dessen Führungskanal ein Dichtband geführt ist.

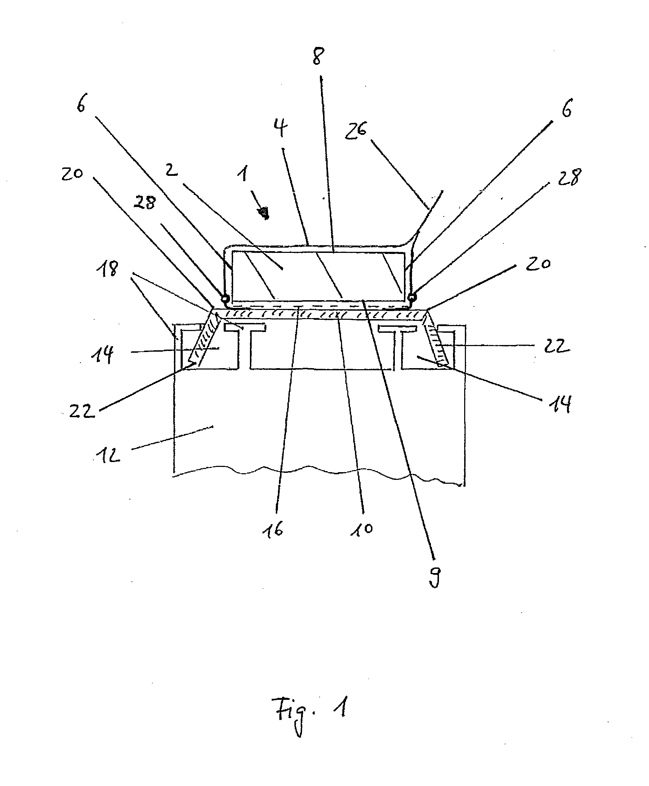

In Fig. 1 ist ein neuartiges Dichtband 1 dargestellt, das für das erfindungsgemäße Einführen in Nuten eines Profilrahmens geeignet ist.

Das Dichtband 1 weist einen Schaumstoffstreifen 2 auf, der im dargestellten Beispiel einen rechteckigen Querschnitt hat. Der Schaumstoffstreifen 2 kann aus jedem beliebigen offenzelligen oder geschlossenzelligen Weichschaumstoff gebildet sein, z.B. aus Polyurethan oder Polyethylen, und kann für eine verzögerte Rückstellung imprägniert sein. Eine mehrlagige Anordnung mehrerer aufeinander laminierter unterschiedlicher Schaumstoffmaterialien ist ebenso denkbar wie die Anordnung einer imprägnierten Schaumstoffschicht auf oder neben einer nicht imprägnierten Schaumstoffschicht. Insbesondere in Querrichtung des Dichtbands können verschiedene Schaumstoffschichten aneinander angrenzend angeordnet sein, etwa um unterschiedliche Luftdurchlässigkeiten des Dichtbands im Innen- und Außenbereich bzw. ein Dampfdiffusionsgefälle zu gewährleisten. Es ist auch eine nicht aneinander angrenzende Anordnung von zwei oder mehr Schaumstoffstreifen 2 möglich.

Der Schaumstoffstreifen 2 erstreckt sich in seiner Längsrichtung weiter als in seiner Querrichtung und weist in den dargestellten Ausführungsformen zwei Seitenflächen 6 und zwei Querflächen 8, 9 (Oberseite 8 und Unterseite 9) auf, welche die beiden Seitenflächen 6 verbinden.

In der dargestellten bevorzugten Ausführungsform ist der Schaumstoffstreifen 2 zumindest teilweise von einer folienhaften Umhüllung 4 umgeben und von dieser in einem vorkomprimierten Zustand gehalten.

Das Material der Umhüllung 4 kann ein Folienmaterial, ein Gittergewebe, Papier oder anderes Material sein, das für den genannten Einsatzzweck geeignet ist. Außerdem sind auch laminierte Folien verwendbar, die aus einer Kunststofffolie bestehen, die mit einem Trägermaterial (z.B. Vlies) laminiert ist, oder gewebeverstärkte Folien. All diese Materialien sind mit dem Ausdruck "folienhaft" umschrieben. Auch Kombinationen dieser Materialien sind möglich. Bevorzugt ist allerdings eine thermoplastische Folie oder eine Schrumpffolie, welche sich unter Wärmeeinfluss zusammenzieht.

Im Bereich der Unterseite 9 des Schaumstoffstreifens 2 ist eine Trägerschicht 10 angeordnet, die in Querrichtung eine gewisse Biegefestigkeit aufweist. Die Biegefestigkeit sollte so hoch sein, dass die Trägerschicht 10 zumindest teilweise die Kraft aufnimmt, welche von der Expansionsbestrebung des Schaumstoffstreifens 2 ausgeht und üblicherweise zu einer Verformung der flexiblen Umhüllung 4 hin zu einem Schlauch mit ovalem oder sogar rundem Querschnitt führen würde, ohne dass die Trägerschicht 10 selbst zu sehr verformt wird. Umgekehrt soll eine gewisse elastische Rückstellkraft der Trägerschicht 10 nach deren Verbiegung erhalten bleiben.

Als Material der Trägerschicht 10 ist vorzugsweise ein Schaumstoff vorgesehen, der eine höhere, bevorzugt deutlich höhere Biegefestigkeit aufweist als der Schaumstoffstreifen 2. In anderen Ausführungsformen kommt außerdem beispielsweise Pappe in Frage, es sind aber auch alle anderen möglichen biegesteifen Materialien, z.B. harte Kunststoffe, verwendbar.

In bestimmten Ausführungsformen sollte die Trägerschicht 10 in Längsrichtung derart biegbar sein, dass das Dichtband noch zu einer Rolle aufgewickelt werden kann.

Ein doppelseitiges Klebeband 16 ist im dargestellten Beispielsfall zwischen der Unterseite 9 des Schaumstoffstreifens 2 und der Trägerschicht 10 angeordnet und verbindet die beiden Elemente fest miteinander. Die feste Verbindung zwischen Schaumstoffstreifen 2 und Trägerschicht 10 kann auch über andere Mittel erfolgen, beispielsweise über thermoplastisches Laminieren. In einigen Ausführungsformen kann die feste Verbindung zwischen Schaumstoffstreifen 2 und Trägerschicht 10 unter Umständen auch entfallen.

Wie aus Fig. 1 hervorgeht, wird das Dichtband an einem Profilrahmen 12 befestigt, etwa einem Fensterrahmenprofil. Derartige Profilrahmen bestehen z.B. aus Kunststoff oder Metall und existieren in einer Vielzahl von Formen, wobei die meisten mindestens eine, meist zwei Nuten 14 aufweisen, welche durch vom Grundkörper des Bauteils abragende, meist abgewinkelte Profilleisten 18 definiert werden. Die Nuten 14 dienen an sich zum Aneinanderreihen von Rahmenprofilen, bilden aber auch gegen das Mauerwerk gerichtete Abschlüsse, die dann entsprechend abgedichtet werden müssen. Hierauf bezieht sich die vorliegende Erfindung.

Zum Zwecke einer einfachen und dauerhaften Verbindung zwischen dem Dichtungsband und dem Profilrahmen 12 weist die Trägerschicht 10 mindestens eine, vorzugsweise zwei Sollknickstellen 20 auf. Die Sollknickstellen 20 dienen dazu, ein Umbiegen eines bzw. zweier Randabschnitte 22 der Trägerschicht 10 nach unten zu gewährleisten. Im Falle zweier Sollknickstellen 20 und zweier umzubiegender Randabschnitte 22 werden diese beiden Randabschnitte 22 gegensinnig nach unten umgebogen. In den dargestellten bevorzugten Ausführungsformen befindet sich die Sollknickstelle 20 jeweils in einem Randbereich der Trägerschicht 10, und der jeweilige Randabschnitt 22 bildet einen Endbereich der Trägerschicht 10.

Die Sollknickstelle 20 ist vorzugsweise durch eine nach unten gerichtete Ausnehmung in der Trägerschicht 10 gebildet. Diese Ausnehmung verbreitert sich vorzugsweise nach unten hin. In der bevorzugten dargestellten Ausführungsform laufen die Seitenwände, welche die Ausnehmung begrenzen, schräg auseinander und die Ausnehmung bildet somit im Querschnitt eine umgekehrte V-Form. Aufgrund des verbleibenden Materials im Steg oberhalb der Ausnehmung ist ein Bestreben zur Rückstellung des Randabschnitts 22 nach oben vorhanden. Es kann auch sinnvoll sein, dass der Randabschnitt 22 beim Umbiegen nach unten Material verdrängt, weil dies zu einer verstärkten Rückstelltendenz führt. Durch die Form und Größe der Ausnehmung kann die Bestrebung zur Rückstellung des Randabschnitts also materialabhängig eingestellt werden. Mit diesem einfachen Klappmechanismus kann eine Verklemmung des Randabschnitts 22 der Trägerschicht 10 in der Nut 14 des Profilrahmens 12 stattfinden.

Neben der dargestellten Form der Ausnehmung ist als Sollknickstelle 20 ebenso ein einseitiger Schnitt, eine einseitige Fräsung, eine durch Thermoformen entstandene Dünnstelle oder eine durch eine andere Art der Materialschwächung erzielte Sollknickstelle möglich.

Wie in Fig. 1 dargestellt ist, erfolgt die Befestigung des Dichtbands am Bauteil 12 spiegelbildlich an zwei entgegengesetzten Randabschnitten der Trägerschicht 10.

In der in Fig. 1 dargestellten Ausführungsform existiert zusätzlich zum zuvor erwähnten Bestreben der Randabschnitte 22 zur Rückstellung in die horizontale Position aufgrund der teilweise elastischen Eigenschaften der Trägerschicht 10 eine weitere Kraftunterstützung, welche ebenfalls eine nach oben gerichtete Kraftkomponente auf den Randabschnitt 22 ausübt. Diese liegt im Expansionsbestreben des in der Umhüllung 4 aufgenommenen Schaumstoffstreifens 2 begründet. Aufgrund dessen fester Verbindung zur Trägerschicht 10 zieht der in der Umhüllung 4 aufgenommene Schaumstoffstreifen 2 durch die ihm innewohnende Expansionskraft die Umhüllung 4 in Richtung eines Ovals und erzeugt damit in den Bereichen der Trägerschicht 10, welche knapp innerhalb der Sollknickstellen 20 liegen, eine nach oben gerichtete Kraftkomponente. Diese bewirkt in Kombination mit der teilweise elastischen Eigenschaft der an sich biegesteifen Trägerschicht 10 eine Verstärkung der Klemmfunktion des Randabschnitts 22 in den abgewinkelten äußeren Profilleisten 18.

Es ist eine Vielzahl von Formen der Profilrahmen 12 sowie der zugehörigen Profilleisten 18 und damit der gebildeten Nuten 14 bekannt. Um das erfindungsgemäße Dichtband möglichst flexibel bei verschiedenen Ausführungsformen von Nuten 14 anwenden zu können, ist die in Fig. 1 dargestellte Ausführungsform besonders geeignet.

In einer anderen Ausführungsform können die Sollknickstellen 20 aber auch entfallen. Dann wird die Trägerschicht 10 mit ihren Randabschnitten 22 lediglich in die Nuten 14 hineingebogen.

Es können auch zusätzliche Fortsätze oder Arretiermittel an den Randabschnitten 22 vorliegen, die zur Verklemmung in den Nuten 14 dienen.

Die in Fig. 1 dargestellte Umhüllung 4 kann in verschiedensten Variationen ausgebildet und an verschiedenen Stellen befestigt sein.

Bevorzugt ist eine Reißlasche 26 vorgesehen, welche durch zwei aneinandergefügte Abschnitte der Umhüllung 4 gebildet ist. Ebenso ist es möglich, lediglich eine fahnenartige Erstreckung der Umhüllung 4 vorzusehen. Durch Ziehen an der Reißlasche 26 wird die folienhafte Umhüllung 4 geöffnet und die Expansion des Schaumstoffstreifens 2 ermöglicht. Hierzu kann in der Umhüllung 4 mindestens eine Sollreißstelle 28, vorzugsweise eine Perforationslinie, vorgesehen sein. Die in Fig. 1 dargestellten Positionen der Sollreißstellen 28 sind dabei bevorzugt, weil in diesem Fall nach dem Öffnen der Umhüllung 4 kein oder nur wenig Material am Schaumstoffstreifen 2 verbleibt. Jedoch ist auch eine Reihe anderer Positionen der Sollreißstellen 28 im Rahmen der Erfindung denkbar.

Ebenso ist es möglich, die Umhüllung 4 durch Zug an der Reißlasche 26 auch ohne Sollreißstelle 28 aufzureißen, wenn die Umhüllung 4 keinen großen Zugkräften widersteht, die Umhüllung 4 über einen Reißfaden aufzureißen oder die Umhüllung mit einem Messer aufzuschneiden oder mit einem anderen Hilfsmittel zu öffnen. Schließlich kann auch die gesamte Umhüllung 4 entfernt werden, wenn die Befestigung der Umhüllung 4 am Schaumstoffstreifen 2 oder an der Trägerschicht 10 durch Zug lösbar ist.

Die Umhüllung deckt im Beispiel der Fig. 1 die beiden Seitenflächen 6 sowie die Oberseite 8 des Schaumstoffstreifens 2 ab. Im Bereich der Unterseite 9 des Schaumstoffstreifens 2 ist jeweils ein erster Abschnitt der Umhüllung 4 über einem Teilbereich der Unterseite 9 des Schaumstoffstreifens 2 angeordnet. Außerdem ist ein zweiter Abschnitt der Umhüllung 4 in einem zweiten Teilbereich der ersten Querfläche, hier Unterseite 9 des Schaumstoffstreifens 2, welche dem ersten Teilbereich gegenüberliegt, zwischen der ersten Querfläche 9 und der Trägerschicht 10 angeordnet. Die beiden Abschnitte der Umhüllung 4 umfassen also die beiden unteren Kanten des Schaumstoffstreifens 2, sind nach innen umgeschlagen und dort vorzugsweise an der Trägerschicht 10 befestigt, vorzugsweise verschweißt oder auflaminiert. Sie können aber auch am Schaumstoffstreifen 2 befestigt sein, etwa verklebt oder auflaminiert bzw. verschweißt. Zwischen den beiden Abschnitten der Umhüllung 4 bleibt die Unterseite 9 des Schaumstoffstreifens 2 von der Umhüllung 4 unbedeckt. Dort ist das doppelseitige Klebeband 16 befestigt. Das Klebeband 16 kann sich aber auch über die beiden Abschnitte der Umhüllung 4 erstrecken.

Auch ein durchgängiger Verlauf der Umhüllung 4 zwischen dem Schaumstoffstreifen 2 und der Trägerschicht 10 ist denkbar. In diesem Fall wäre neben dem doppelseitigen Klebeband 16 noch ein weiteres doppelseitiges Klebeband notwendig, welches die Verbindung zwischen der Umhüllung 4 und dem streifenförmigen Element 10 herstellt.

In der Praxis sind die Schaumstoffstreifen 2 meist so vorkomprimiert, dass sie beim Entspannen vorzugsweise bis auf etwa das Fünf- bis Zehnfache ihrer im vorkomprimierten Zustand eingenommenen Dicke expandieren können, wovon aber häufig nur etwa die Hälfte ausgenutzt wird, um eine sichere Anlage an dem Gebäudeteil zu gewährleisten, das dem abzudichtenden Profilrahmen gegenüberliegt.

Es sei noch erwähnt, dass in Fig. 1 der Schaumstoffstreifen 2, die Umhüllung 4, das Klebeband 16 und die Trägerschicht 10 teilweise in einem gewissen Abstand zueinander dargestellt sind, um die einzelnen Elemente, die das Dichtband bilden, klar voneinander abzuheben. In Wirklichkeit liegen diese Elemente jeweils eng aufeinander auf.

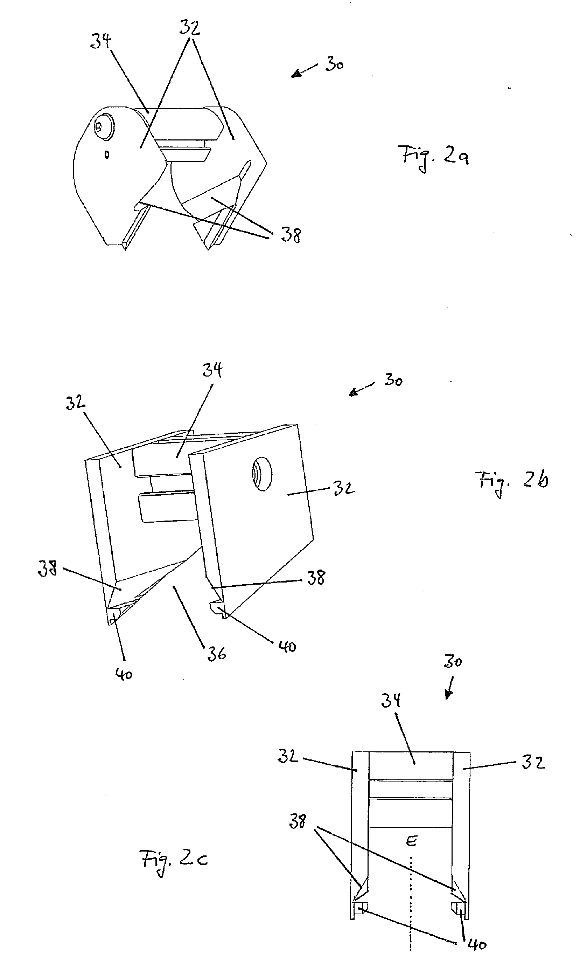

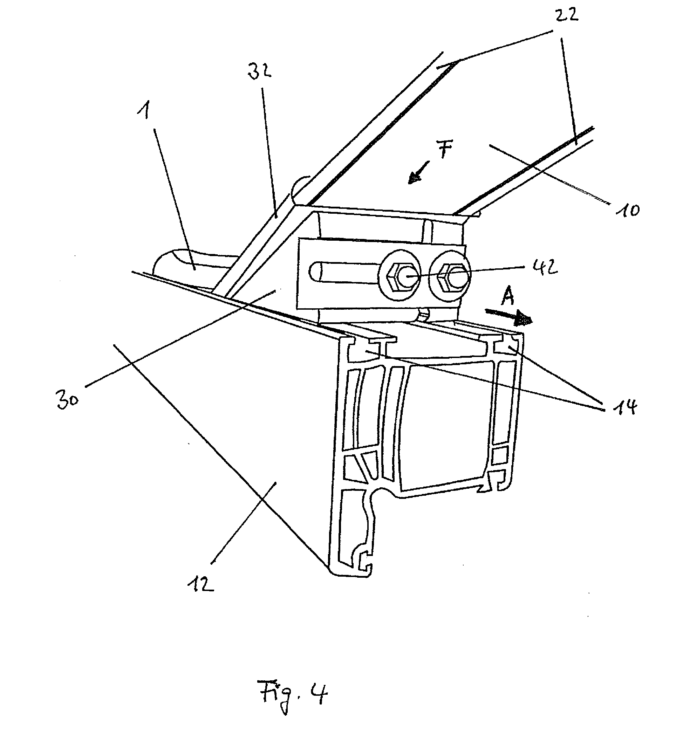

Das Werkzeug 30 aus Fig. 2a bis 2c dient nun zum Einführen der Trägerschicht 10 des Dichtbandes 1 in die Nuten 14 des Profilrahmens 12. Hierzu umfasst das Werkzeug 30 zwei seitliche Führungselemente 32, die miteinander über ein Verbindungsmittel 34, im vorliegenden Beispielsfall einige Querstreben, miteinander verbunden sind. Die Führungselemente 32 können beispielsweise aus hartem Kunststoff, Metall oder Holz ausgebildet sein. Die Führungselemente 32 sind im dargestellten Beispielsfall als seitliche Wandelemente des Werkzeugs 30 ausgestaltet und definieren zwischen sich einen Führungskanal 36 für die Trägerschicht 10 des Dichtbands 1. Dieser Führungskanal 36 verläuft von einem höher gelegenen Eintrittspunkt zu einem tiefer gelegenen Austrittspunkt in einer Führungsrichtung F (siehe Fig. 4) des Dichtbands 1 im Werkzeug 30.

Erfindungswesentlich ist dabei, dass sich der Führungskanal 36 in Führungsrichtung F verjüngt, wodurch die Trägerschicht 10 des Dichtbands 1 in Richtung des Austrittspunkts des Führungskanals 36 im Bereich seiner Randabschnitte 22 nach innen umgebogen wird. Aufgrund dieses Umbiegevorgangs der Randabschnitte 22 der Trägerschicht 10 bei einer Relativbewegung zwischen Werkzeug 30 und Dichtband 1 erhält die Trägerschicht 10 des Dichtbands 1 im Bereich des Austrittspunktes des Führungskanals 36 des Werkzeugs 30 automatisch die notwendige Form, um in diesem umgebogenen Zustand am Austrittspunkt in die Nuten 14 des Profilrahmens 12 einzutreten und sich dort gemäß Fig. 1 zu verrasten.

In bevorzugten Ausführungsformen weist jedes Führungselement 32 einen gegenüber der Führungsrichtung F schräg geneigten Wandabschnitt 38 auf, der derart ausgebildet ist, dass er in Richtung des Austrittspunktes eine Kraftkomponente auf den jeweils durch ihn geführten Randabschnitt 22 der Trägerschicht 10 nach unten ausübt. Ergänzend zur Verjüngung des Führungskanals 36 wird auf diese Weise sichergestellt, dass die Randabschnitte 22 der Trägerschicht 10 gegensinnig nach unten geklappt werden. In der in Fig. 2a bis 2c dargestellten Ausführungsform ist der schräg geneigte Wandabschnitt 38 gleichzeitig die seitliche Begrenzung des Führungskanals 36. Außerdem sind die beiden schräg geneigten Wandabschnitte 38 der beiden Führungselemente 32 spiegelsymmetrisch bezüglich der Mittelebene E (Fig. 2c) des Führungskanals 36 ausgebildet.

Zur Sicherung des Werkzeugs 30 in den Nuten 14 des Profilrahmens 12 weist das Werkzeug in seinem unteren Endbereich vorzugsweise zwei Halterungsmittel 40 auf. In den Fig. 2a bis 2c dargestellten Ausführungsbeispiel sind die Halterungsmittel als einstückig mit den Führungselementen 32 ausgebildete, nach innen ragende Vorsprünge ausgebildet, die sich an entsprechenden Schultern der Profilleisten 18 des Profilrahmens 12, welche die Nuten 14 nach oben begrenzen, abstützen. Die Halterungsmittel 40 liegen sich gegenüber und sind gegen eine Federkraft zueinander bewegbar. Ebenso ist eine Anordnung der Halterungsmittel 40 nach außen denkbar.

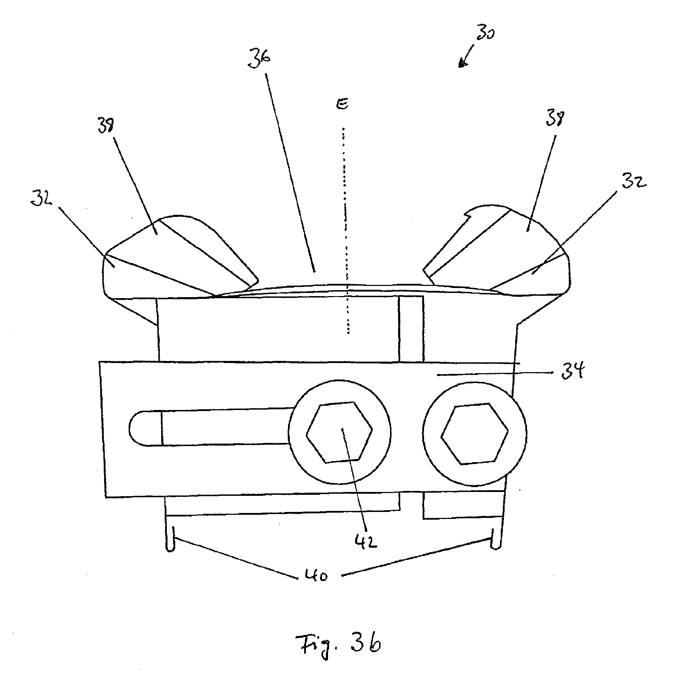

Die Halterungsmittel 40 sind derart ausgestaltet, dass sie entlang den Nuten 14 des Profilrahmens 12 verschiebbar sind. Die Halterungsmittel 40 können auch jede mögliche andere Gestalt annehmen, solange sie ein Verklemmen in den Nuten 14 des Profilrahmens 12 ermöglichen. Ein Beispiel einer weiteren Ausführungsform der Halterungsmittel 40 ist in Fig. 3b dargestellt. Hier sind die Halterungsmittel 40 als U-förmige Federhaken ausgestaltet, die von einem Bodenbereich des Werkzeugs 30 nach unten abragen.

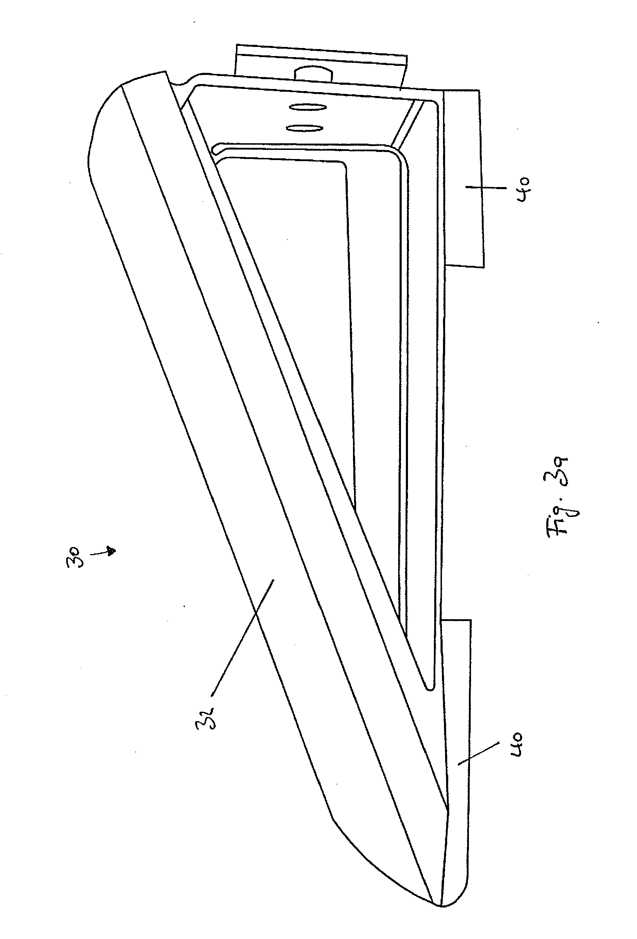

Die in Fig. 3a und 3b dargestellte Ausführungsform des Werkzeugs 30 besitzt neben den beiden Führungselementen 32 auch ein Verbindungsmittel 34, das jedoch über einen Verstellmechanismus 42 längenverstellbar ist, um an verschiedene Dimensionen von Profilrahmen 12 angepasst zu werden. Insgesamt ähnelt die Konstruktion des Werkzeugs 30 gemäß der Ausführungsform der Fig. 3a und 3b einem Schlitten, der einen schräg nach unten geneigten Aufsatz aufweist.

Die beiden Führungselemente 32 sind gemäß Fig. 3a und 3b als zwei Seitenschienen ausgebildet, von denen ebenfalls jede einen schräg geneigten Wandabschnitt 38 aufweist, sodass in Richtung des Austrittspunktes des Führungskanals 36 eine Kraftkomponente auf die Randabschnitte 22 der Trägerschicht 10 nach unten ausgeübt wird. Selbstverständlich verjüngt sich der Führungskanal 36 auch hier in Richtung des Austrittspunktes.

Zum Einführen der Trägerschicht 10 des Dichtbands 1 in die Nuten 14 des Profilrahmens 12 bedarf es, wie oben erläutert, einer Relativbewegung zwischen dem Dichtband 1 und dem Führungskanal 36 im Werkzeug 30. Die Relativbewegung zwischen Dichtband und Werkzeug 30 kann einerseits dadurch erfolgen, dass das Dichtband 1 von hinten nach vorne durch den Führungskanal 36 in Führungsrichtung F geschoben wird und somit am Austrittspunkt jeweils in die Nuten 14 des Profilrahmens 12 eingeführt wird. Noch einfacher gestaltet sich der Einführvorgang, wenn, nach einem erstmaligen Einführen eines Abschnitts des Dichtbands 1 in den Führungskanal 36 und anschließend in die Nuten 14 des Profilrahmens 12, das Dichtband 1 stationär gehalten wird und stattdessen das Werkzeug parallel zum Profilrahmen 12 in Richtung seines hinteren Endes (siehe Pfeil A in Fig. 4) bewegt wird. Auf diese Weise wird die Trägerschicht 10 des Dichtbands 1 ebenfalls automatisch in die Nuten 14 des Profilrahmens 12 eingeführt.

Mit dem erfindungsgemäßen Werkzeug und Verfahren kann dabei nicht nur ein Holm eines Profilrahmens 12 besonders schnell mit einem Dichtband 1 ausgerüstet werden, sondern beispielsweise ein gesamter Fensterrahmen, der aus vier derartigen Holmen zusammengesetzt ist. Dabei muss lediglich im Bereich der Ecken des Fensterrahmens ein Abschnitt der Trägerschicht 10 des Dichtbands 1 aus Gründen der besseren Biegbarkeit des Dichtbands 1 entfernt werden und das Dichtband manuell umgebogen werden. Daraufhin kann das Werkzeug 30 in die Nuten 14 des nächsten Holmes eingesetzt werden, das Dichtband in den Führungskanal 36 des Werkzeugs 30 aufgenommen werden, und die Trägerschicht 10 des Dichtbandes 1 wird dann, wenn das Werkzeug 30 in den Nuten 14 des Profilrahmens 12 in Richtung des Pfeils A verschoben wird, wieder halbautomatisch in die Nuten 14 des Profilrahmens 12 eingefügt.

Mit dem erfindungsgemäßen Werkzeug und Verfahren können damit eine Vielzahl unterschiedlicher Profilrahmen 12 besonders sicher und schnell mit einem Dichtband 1 ausgerüstet werden. Aufgrund der besonderen Ausgestaltung des entsprechenden Dichtbandes 1 ist die Verbindung zwischen Dichtband 1 und Profilrahmen 12 gleichzeitig besonders einfach und dauerhaft.

## Patentansprüche

1. Werkzeug (30) zum Einführen einer Trägerschicht (10) eines Dichtbandes (1) in Nuten (14) eines Profilrahmens (12), mit
zwei seitlichen Führungselementen (32), die miteinander verbunden sind,
wobei sich die Führungselemente (32) gegenüberliegen und zwischen sich einen Führungskanal (36) für die Trägerschicht (10) des Dichtbands (1) definieren, der von einem höher gelegenen Eintrittspunkt zu einem tiefer gelegenen Austrittspunkt in einer Führungsrichtung (F) des Werkzeugs (30) verläuft, und
wobei sich der Führungskanal (36) in Führungsrichtung (F) verjüngt.

2. Werkzeug (30) nach Anspruch 1, **dadurch gekennzeichnet, dass** jedes Führungselement (32) einen gegenüber der Führungsrichtung (F) schräg geneigten Wandabschnitt (38) aufweist, der derart ausgebildet ist, dass er in Richtung des Austrittspunktes eine Kraftkomponente auf einen durch ihn geführten Randabschnitt (22) der Trägerschicht (10) nach unten ausübt.

3. Werkzeug (30) nach Anspruch 2, **dadurch gekennzeichnet, dass** der schräg geneigte Wandabschnitt (38) gleichzeitig die seitliche Begrenzung des Führungskanals (36) bildet.

4. Werkzeug (30) nach Anspruch 2 oder 3, **dadurch gekennzeichnet, dass** die schräg geneigten Wandabschnitte (38) der beiden Führungselemente (32) spiegelsymmetrisch bezüglich einer Mittelebene (E) des Führungskanals (36) ausgebildet sind.

5. Werkzeug (30) nach einem der vorangehenden Ansprüche, **dadurch gekennzeichnet, dass** es in seinem unteren Endbereich mehrere Halterungsmittel (40) aufweist, die zur Halterung des Werkzeugs (30) in den Nuten (14) des Profilrahmens (12) dienen.

6. Werkzeug (30) nach Anspruch 5, **dadurch gekennzeichnet, dass** die Halterungsmittel (40) derart ausgestaltet sind, dass sie entlang den Nuten (14) des Profilrahmens (12) verschiebbar sind.

7. Werkzeug (30) nach einem der vorangehenden Ansprüche, **dadurch gekennzeichnet, dass** sich die Halterungsmittel (40) gegenüberliegen und gegen eine Federkraft zueinander bewegbar sind.

8. Werkzeug (30) nach einem der vorangehenden Ansprüche, **dadurch gekennzeichnet, dass** die beiden Führungselemente (32) über ein längenverstellbares Verbindungsmittel (34) miteinander verbunden sind.

9. Verfahren zum Einführen einer Trägerschicht (10) eines Dichtbandes (1) in Nuten (14) eines Profilrahmens (12) mit folgenden Schritten:
- Bereitstellen des Dichtbands (1) aus weichem Schaumstoff mit der Trägerschicht (10);
- Einführen eines Werkzeugs (30) in Nuten (14) des Profilrahmens (12);
- Einführen des Dichtbands (1) in einen Führungskanal (36) des Werkzeugs (30); und
- Verschieben des Werkzeugs (30) in den Nuten (14) des Profilrahmens (12), dabei durch das Verschieben induziertes automatisches Verbiegen von Randabschnitten (22) der Trägerschicht (10) im Führungskanal (36) und zwangsgeführtes Einführen der abgebogenen Randabschnitte (22) der Trägerschicht (10) in die Nuten (14) des Profilrahmens (12) zur großflächigen Aufnahme der Trägerschicht (10) in den Nuten (14) des Profilrahmens (12).

## Claims

1. A tool (30) for inserting a carrier layer (10) of a sealing tape (1) into grooves (14) of a profile frame (12), with
two lateral guide elements (32), which are connected to one another,
wherein the guide elements (32) are disposed opposite to one another and define between them a guide channel (36) for the carrier layer (10) of the sealing tape (1) which extends from an entry point disposed relatively higher to an exit point disposed relatively lower in a guiding direction (F) of the tool (30), and
wherein the guide channel (36) tapers in the guiding direction (F).

2. The tool (30) according to claim 1,
**characterised in that**
each guide element (32) provides a wall portion (38) inclined diagonally relative to the guiding direction (F), which is embodied in such a manner that it exerts a downward force component in the direction towards the exit point on an edge portion (22) of the carrier layer (10) guided through it.

3. The tool (30) according to claim 2,
**characterised in that**
the diagonally inclined wall portion (38) at the same time forms the lateral limit of the guide channel (36).

4. The tool (30) according to claim 2 or 3,
**characterised in that**
the diagonally inclined wall portions (38) of the two guide elements (32) are embodied in mirror symmetry relative to a middle plane (E) of the guide channel (36).

5. The tool (30) according to any one of the preceding claims,
**characterised in that**
it provides several holding means (40) in its lower end region, which serve for the holding of the tool (30) in the grooves (14) of the profile frame (12).

6. The tool (30) according to claim 5,
**characterised in that**
the holding means (40) are embodied in such a manner that they are displaceable along the grooves (14) of the profile frame (12).

7. The tool (30) according to any one of the preceding claims,
**characterised in that**
the holding means (40) are disposed opposite to one another and can be moved towards one another against a spring force.

8. The tool (30) according to any one of the preceding claims,
**characterised in that**
the two guide elements (32) are connected to one another via a longitudinally adjustable connecting means (34).

9. A method for inserting a carrier layer (10) of a sealing tape (1) into grooves (14) of a profile frame (12) with the following steps:
- Provision of the sealing tape (1) made from soft-foam material with the carrier layer (10);
- Insertion of a tool (30) into grooves (14) of the profile frame (12);
- Insertion of the sealing tape (1) into a guide channel (36) of the tool (30); and
- Displacement of the tool (30) in the grooves (14) of the profile frame (12), in this context, induced by the displacement, automatic bending of edge portions (22) of the carrier layer (10) within the guide channel (36) and forced insertion of the bent edge portions (22) of the carrier layer (10) into the grooves (14) of the profile frame (12) for the extensive reception of the carrier layer (10) in the grooves (14) of the profile frame (12).

## Revendications

1. Outil (30) pour l'introduction d'une couche support (10) d'une bande d'étanchéité (1) dans des rainures (14) d'un cadre profilé (12), comprenant
deux éléments de guidage latéraux (32), qui sont assemblés entre eux,
les éléments de guidage (32) étant en vis-à-vis et définissant entre eux un canal de guidage (36) pour la touche support (10) de la bande d'étanchéité (1), lequel canal s'étend d'un point d'entrée, placé à un niveau supérieur, à un point de sortie, placé à un niveau inférieur, dans une direction de guidage (F) de l'outil (30), et
le canal de guidage (36) se rétrécissant dans la direction de guidage (F).

2. Outil (30) selon la revendication 1, **caractérisé en ce que** chaque élément de guidage (32) présente une section de paroi (38) inclinée en oblique par rapport à la direction de guidage (F), laquelle section est réalisée de telle sorte qu'elle exerce vers le bas, en direction du point de sortie, une composante de force sur une section de bordure (22), guidée au travers d'elle, de couché support (10).

3. Outil (30) selon la revendication 2, **caractérisé en ce que** la section de paroi (38) inclinée en oblique forme simultanément la délimitation latérale du canal de guidage (36).

4. Outil (30) selon la revendication 2 ou 3, **caractérisé en ce que** les sections de paroi (38) inclinées en oblique des deux élément de guidage (32) ont une réalisation symétrique par rapport à und plan médian (E) du canal de guindage (36).

5. Outil (30) selon l'une des revendications précédentes, **caractérisé en ce qu'**il présente dans sa zone d'extrémité inférieure plusieurs moyens de fixation (40), qui servent à fixer l'outil (30) dans les rainures (14) du cadre profilé (12).

6. Outil (30) selon la revendication 5, **caractérisé en ce que** les moyens de fixation (40) sont configurés de telle sorte qu'ils sont déplaçables le long des rainures (14) du cadre profilé (12).

7. Outil (30) selon l'une des revendications précédentes, **caractérisé en ce que** les moyens de fixation (40) sont en vis-à-vis et mobiles l'un par rapport à l'autre contre une force de ressort.

8. Outil (30) selon l'une des revendications précédentes, **caractérisé en ce que** les deux éléments de guidage (32) sont assemblés entre eux par l'intermédiaire d'un moyen d'assemblage (34) réglable en longueur.

9. Procédé d'introduction d'une couche support (10) d'une bande d'étanchéité (1) dans des rainures (14) d'un cadre profilé (12), comprenant les étapes suivantes :
- la mise à disposition de la bande d'étanchéité (1) en mousse souple avec la couche support (10) ;
- l'introduction d'un coutil (30) dans des rainures (14) du cadre profilé (12) ;
- l'introduction de la bande d'étanchéité (1) dans un canal de guidage (36) de l'outil (30) ; et
- le déplacement de l'outil (30) dans les rainures (14) du cadre profilé (12), avec flexion automatique, induite par le déplacement, de sections de bordure (22) de la couche support (10) dans le canal de guidage (36) et l'introduction forcée des sections de bordure (22) pliées de la couche support (10) dans les rainures (14) du cadre profilé (12) pour une large réception de la couche support (10) dans les rainures (14) du cadre profilé (12).
